(19) Europäisches Patentamt
European Patent Office
Office européen des brevets

(11) **EP 4 593 099 A1**

(12) **EUROPEAN PATENT APPLICATION**

(43) Date of publication:
**30.07.2025 Bulletin 2025/31**

(21) Application number: 25152314.8

(22) Date of filing: **16.01.2025**

(51) International Patent Classification (IPC):
*H01M 4/04* (2006.01)     *H01M 4/13* (2010.01)
*H01M 4/139* (2010.01)     *H01M 10/42* (2006.01)
*H01M 10/0525* (2010.01)

(52) Cooperative Patent Classification (CPC):
**H01M 4/13; H01M 4/0404; H01M 4/139;
H01M 10/4235;** H01M 10/0525; H01M 2010/4292

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Validation States:
**TN**

(30) Priority: **26.01.2024 KR 20240012651**

(71) Applicant: **SAMSUNG SDI CO., LTD.
Yongin-si, Gyeonggi-do 17084 (KR)**

(72) Inventor: **Lee, Hyunjin
17084 Yongin-si, Gyeonggi-do (KR)**

(74) Representative: **Gulde & Partner
Patent- und Rechtsanwaltskanzlei mbB
Berliner Freiheit 2
10785 Berlin (DE)**

(54) **ELECTRODE FOR RECHARGEABLE BATTERY**

(57)     An electrode for a rechargeable battery includes a substrate having an electrode uncoated region, and an active material layer forming an active electrode region on the substrate, the active material layer having an end portion that has an inclined surface with respect to the substrate. An auxiliary layer is formed on the inclined surface of the active material layer, wherein the auxiliary layer includes an active material and a resin.

EP 4 593 099 A1

**Description**

## BACKGROUND OF THE INVENTION

### (a) Field of the Invention

The present disclosure relates to an electrode for a rechargeable battery.

### (b) Description of the Related Art

A rechargeable battery is a battery that is repeatedly charged and discharged, unlike a primary battery. A small-capacity rechargeable battery can be used in a portable small electronic device such as a mobile phone, a laptop computer, and a camcorder. A large-capacity and high-density rechargeable battery can be used for a power source or energy storage for driving a motor of a hybrid vehicle and an electric vehicle.

A rechargeable battery can be manufactured by sealing an electrode assembly together with an electrolyte in a case, with the electrode assembly having a structure in which a positive electrode, a separator, and a negative electrode are stacked.

The positive electrode and the negative electrode may be manufactured into a jelly roll-shaped electrode assembly by continuously applying an active material on a long band-shaped substrate to form an active material layer and then winding the active material layer. Alternatively, the positive and negative electrodes may be manufactured into a stacked electrode assembly by stacking sheet-shaped electrodes cut to a predetermined length.

Active material layers are formed on both surfaces of a substrate to increase the capacity of the rechargeable battery. However, there may be a large difference in thickness at edges thereof. The difference in thickness results in a difference in capacity depending on the amount of active material. When the capacity ratio of the positive electrode to the negative electrode, NP, is less than 1, negative electrode capacity is insufficient, thereby making a face-to-face state unstable. This may result in performance degradation of the rechargeable battery because of lithium precipitation during charging and safety problems.

## SUMMARY OF THE INVENTION

The invention is defined by the appended claims. The description that follows is subjected to this limitation. Any disclosure lying outside the scope of said claims is only intended for illustrative as well as comparative purposes.

An embodiment provides an electrode for a rechargeable battery in which there is little or no difference in thickness in active material layer on both surfaces of a substrate, there is a uniform thickness and application amount of the active layer material, and, thus, there is no difference in capacity ratio to thereby reduce lithium precipitation.

An embodiment of the present disclosure provides an electrode for a rechargeable battery, the electrode including a substrate, an active material layer forming an electrode active region on the substrate, the active material layer having an end portion that has an inclined surface with respect to the substrate, and an auxiliary layer formed on the inclined surface of the active material layer, wherein the auxiliary layer includes an active material and a resin.

The active material and the resin of the auxiliary layer may be mixed in a ratio of 99.9:0.1 to 90:10.

The auxiliary layer may include a lower layer made of an active material and a resin and an upper layer made of a resin and positioned on the lower layer, and the active material and the resin of the lower layer may be mixed in a ratio of 99.9:0.1 to 90:10.

A thickness of the upper layer may be 0.5 $\mu$m to of 20 $\mu$m.

A thickness of the auxiliary layer may be 10 % or less of a maximum thickness of the active material layer.

The resin may include one of a thermosetting resin, a UV curing resin, and a thermoplastic resin.

The thermosetting resin may include at least one of an epoxy resin, a phenol resin, a melamine resin, a urea resin, an unsaturated polyester resin, an alkyd resin, a silicon resin, a polyurethane resin, and a polyimide.

The thermoplastic resin may include at least one of polytetrafluoroethylene, polyethylene, polypropylene, polystyrene, polyvinyl chloride, polyvinylidene chloride, a fluororesin, an acrylic resin, a polyacetic acid vinyl resin, a polyamide resin, a polycarbonate resin, an acetal resin, a polyphenylene oxide, a polyester, and a polysulfone.

The UV curing resin may include at least one of a urethane acrylate, an unsaturated polyester, an epoxy acrylate, an oxetane, a polyvinyl ether, a polyester acrylate, a silicon acrylate, an epoxy resin, a glycidyl ether, and an epoxy resin.

The UV curing resin may further include a photopolymerization initiator, and the photopolymerization initiator may be 0.01 mass% to 10 mass% based on a total mass of the resin included in the auxiliary layer.

The active material include may be a carbon-based active material.

According to another embodiment, an electrode assembly comprises a negative electrode that includes a substrate having an electrode uncoated region, an active material layer forming an electrode active region on the substrate, the active material layer having an end portion that has an inclined surface with respect to the substrate, and an auxiliary layer formed on the inclined surface of the active material layer, wherein the auxiliary layer includes an active material and a resin. The electrode assembly also comprises a positive electrode overlapping the negative electrode, and a separator disposed between the negative electrode and the positive electrode. A portion of an end portion of the positive electrode corresponds to the inclined surface of the negative electrode on which the auxiliary layer is formed.

As in the embodiment of the present disclosure, when the auxiliary layer is formed at the edge of the active material layer, a thickness difference between the edge and the middle portion of the electrode active region may be reduced.

Accordingly, a capacity difference due to the thickness difference or application amount difference between the edge and the middle portion electrode active region is reduced, thereby reducing lithium precipitation. Accordingly, a safe rechargeable battery may be provided.

## BRIEF DESCRIPTION OF THE DRAWINGS

FIG. 1 illustrates a schematic cross-sectional view of an electrode according to an embodiment of the present disclosure.

FIG. 2 illustrates a schematic cross-sectional view of an electrode according to another embodiment of the present disclosure.

FIG. 3 illustrates a schematic exploded perspective view of an electrode assembly according to an embodiment of the present disclosure.

FIG. 4 illustrates a top plan view of positive and negative electrodes of the electrode assembly of FIG. 3.

FIG. 5 illustrates a cross-sectional view taken along line V-V' of FIG. 4.

FIG. 6 illustrates a cross-sectional view taken along line VI-VI' of FIG. 4.

FIG. 7 illustrates an effect of an auxiliary layer according to an embodiment of the present disclosure.

FIG. 8 illustrates a schematic perspective view of a rechargeable battery according to another embodiment of the present disclosure.

FIG. 9 illustrates a cross-sectional view taken along line IX-IX' of FIG. 8.

## DETAILED DESCRIPTION OF THE EMBODIMENTS

The present disclosure will be described more fully hereinafter with reference to the accompanying drawings, in which embodiments of the invention are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

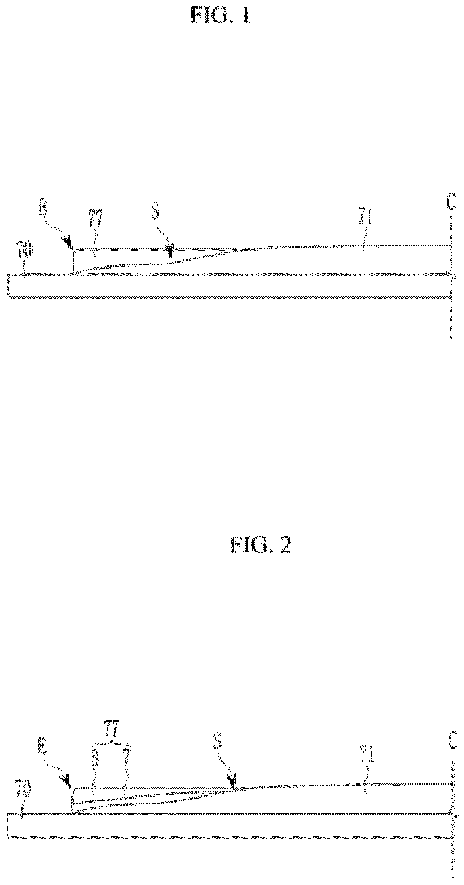

FIG. 1 illustrates a schematic cross-sectional view of an electrode according to an embodiment of the present disclosure.

As shown in FIG. 1, an electrode for a rechargeable battery according to an embodiment of the present disclosure includes a substrate 70 and an active material layer 71 formed on the substrate 70.

The electrode may be a negative electrode, and the active material layer 71 may include a negative electrode active material. The negative electrode active material may be a carbon-based active material. The carbon-based negative electrode active material may be artificial graphite or a mixture of artificial graphite and natural graphite. When artificial graphite or a crystalline carbon-based material that is a mixture of artificial graphite and natural graphite is used as the negative electrode active material, crystallographic characteristics of the particles are more developed than when amorphous carbon-based active material is used, and, thus, the orientation characteristics of the carbon material in the electrode plate with respect to an external magnetic field may be further improved. The forms of artificial graphite or natural graphite may be amorphous, plate-shaped, flake-shaped, spherical, fibrous, or a combination thereof. In addition, when the artificial graphite and the natural graphite are mixed and used, the mixing ratio may be 70:30 wt% to 95:5 wt%.

In addition, the negative electrode active material layer may further include at least one of a Si-based negative electrode active material, a Sn-based negative electrode active material, and a LiMOx (M=metal)-based material. When the negative electrode active material layer further includes these, that is, when the carbon-based negative electrode active material is included as the first negative electrode active material and the negative electrode active material is included as the second negative electrode active material, a mixing ratio of the first negative electrode active material and the second negative electrode active material may be 50:50 wt% to 99:1 wt%.

The LiMOx (M=metal)-based negative electrode active material may be a lithium vanadium oxide.

The Si-based negative electrode active material may include Si, a Si-C composite, $SiO_x$ ($0<x<2$), and a Si-Q alloy (where Q is an element selected from the group consisting of alkali metals, alkali earth metals, Group 13 elements, Group 14 elements, Group 15 elements, Group 16 elements, transition metals, rare-earth elements, and combinations thereof, but is not Si). Examples of the Sn-based negative electrode active material may include Sn, $SnO_2$, a Sn-R alloy (where R is an element selected from the group consisting of alkali metals, alkali earth metals, Group 13 elements, Group 14 elements, Group 15 elements, Group 16 elements, transition metals, rare-earth elements, and combinations thereof, but is not Sn). In addition, a mixture of at least one thereof and $SiO_2$ may be used. The elements Q and R may be selected and used from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The content of the negative electrode active material in the negative electrode active material layer may be 95 wt% to 99 wt% with respect to the total weight of the negative electrode active material layer.

The negative electrode active material may include a binder and may optionally further include a conductive material. A content of the binder in the negative electrode active material may be 1 wt% to 5 wt% with respect to the total weight of the negative electrode active material. In addition, when a conductive material is further included, the negative electrode active material may be used in an amount of 90 wt% to 98 wt%, the binder may be used in an amount of 1 wt% to 5 wt%, and the conductive material may be used in an amount of 1 wt% to 5 wt%.

The binder serves to adhere the negative electrode active material particles to each other well and also to adhere the negative electrode active material to the negative electrode substrate. As the binder, a non-aqueous binder, an aqueous binder, or a combination thereof may be used.

The non-aqueous binder may include polyvinyl chloride, carboxylated polyvinyl chloride, polyvinyl fluoride, polymer including ethylene oxide, polyvinylpyrrolidone, polyurethane, polytetrafluoroethylene, polyvinylidene fluoride, polyethylene, polypropylene, polyamideimide, polyimide, or a combination thereof.

The aqueous binder may include styrene-butadiene rubber, acrylated styrene-butadiene rubber (SBR), acrylonitrile-butadiene rubber, acrylonitrile-butadiene rubber, acrylic rubber, butyl rubber, ethylene propylene copolymer, polyepichlorohydrin, polyphosphazene, polyacrylonitrile, polystyrene, ethylene propylene diene copolymer, polyvinyl pyridine, chlorosulfonated polyethylene, latex, polyester resin, acrylic resin, phenol resin, epoxy resin, polyvinyl alcohol, acrylate resin, or a combination thereof.

When the aqueous binder is used as the negative electrode binder, a cellulose-based compound that may impart viscosity may be further included as a thickener. As the cellulose-based compound, at least one of carboxymethyl cellulose, hydroxypropylmethyl cellulose, methyl cellulose, or alkali metal salts thereof may be mixed and used. As the alkali metal, Na, K, or Li may be used. An amount of the thickener used may be 0.1 to 3 parts by weight with respect to 100 parts by weight of the negative electrode active material.

The conductive material is used in order to give conductivity to the electrode, and may be any material as long as the electronic conductive material does not trigger a chemical change in the battery configuration. Examples of the conductive material may include conductive materials including a carbon-based material such as natural graphite, artificial graphite, carbon black, acetylene black, Ketjen black, and carbon fiber, a metal powder such as copper, nickel, aluminum, and silver, a metal-based material such as a metal fiber, a conductive polymer such as a polyphenylene derivative, or a mixture thereof.

The Brunauer-Emmett-Teller (BET) specific surface area of the negative electrode active material layer may be less than 3.0 $m^2/g$, and may also be 0.6 $m^2/g$ to 1.2 $m^2/g$. If the BET specific surface area of the negative electrode active material layer is less than 3.0 $m^2/g$, the electrochemical lifespan characteristics of the cell may be improved.

The BET measurement is performed by charging and discharging a lithium rechargeable battery including the negative electrode, then cutting the negative electrode obtained by disassembling the battery in a completely discharged state into a certain size, placing it in a BET sample holder, and measuring it using a nitrogen gas adsorption method.

The negative electrode may have a cross-sectional loading level (L/L) of 6 $mg/cm^2$ to 65 $mg/cm^2$. The edge of the active material layer 71 may have an inclined surface that is inclined with respect to the substrate 70, and an auxiliary layer 77 formed on the inclined surface. A width D1 of the edge of the active material layer 71 may extend 15 mm from an end E of the active material layer in a direction toward a central portion C.

The auxiliary layer 77 may be formed on all or a portion of the edge of the active material layer 71 to compensate for a difference in thickness due to inclination of the active material layer 71. Accordingly, the width D1 of the edge of the active material layer 71 may be equal to or greater than a width D2 of the auxiliary layer 77.

The auxiliary layer 77 compensates for the reduced thickness of the active material layer 71 due to the inclination of the active material layer 71. As such, the thickness of the auxiliary layer 77 gradually decreases from the end E of the edge toward the central portion C, thereby compensating for the inclination of the active material layer 71. Accordingly, the thicknesses of the combined active material layer 71 and auxiliary layer 77 at the edge may be substantially the same as the thickness of the active material layer 71 at the central portion C of the active material layer 71. That is, the thickness of the active material layer 71 and combination of active material layer 71 and auxiliary layer 77 is constant, so that the thickness at the edge and the thickness at the central portion C may be substantially the same. Accordingly, lithium precipitation due to a difference in the amounts of active material applied at the edge and the central portion may be reduced.

The N/P ratio according to the following Equation 1 may be changed according to the position at which the positive electrode active material layer and the negative electrode active material layer face each other. The negative electrode specific capacity is generally designed to be higher than the positive electrode specific capacity, so the negative electrode may be formed larger than the positive electrode.

$$N/P \ Ratio = \frac{\text{Negative Electrode Capacity Value (mAh)}}{\text{Positive Electrode Capacity value (mAh)}}$$

The active material layer may be applied in a slurry state, and after rolling, a notching process may be performed to form a tab. In such a case, notching is performed on the entire edge of the electrode portion of the edge of the active material layer is cut and removed. Thus, the thickness of the remaining active material layer may vary depending on the cut position. As described above, the difference in thickness of the active material layer may lead to a difference in specific capacity, and if the negative electrode specific capacity is less than the positive electrode specific capacity such that the NP ratio is less than 1, lithium precipitation may occur.

Particularly, when misalignment occurs and the end portion of the positive electrode active material layer moves toward an inclined surface at the edge of the negative electrode active material layer, the specific capacity difference with the positive electrode increases due to the decreasing thickness in the part of the negative electrode active material layer corresponding to the inclined surface.

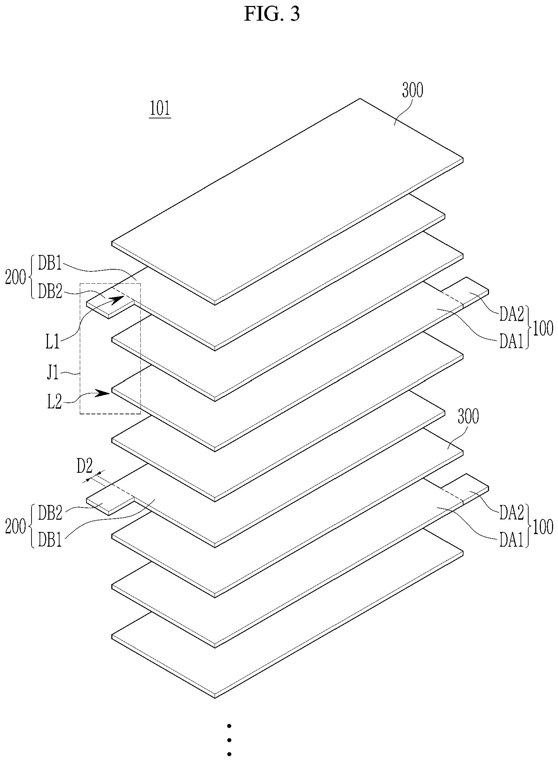

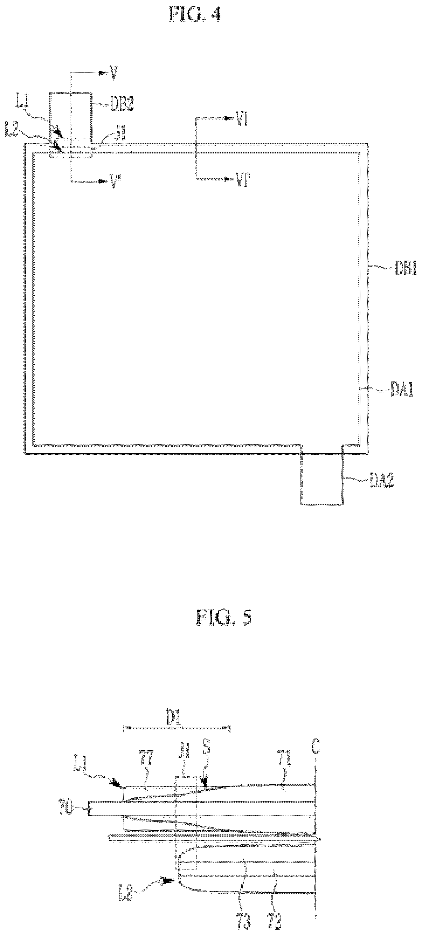

In the embodiment of the present disclosure, the auxiliary layer 77 is formed to increase a specific capacity in the part of the negative electrode active material layer 71 corresponding to the inclined surface edge, which is an area J1 (see FIG. 3 and FIG. 4) facing an end portion of the positive electrode active material layer. Thus, phenomenon such as lithium precipitation due to a difference in specific capacity may be prevented.

The auxiliary layer 77 may be solidified by a separate curing or drying method from the formation of the active material layer 71. The auxiliary layer 77 may include an active material and a resin, and the active material and the resin may be mixed at a ratio of 99.9:0.1 to 90:10. The resin may be a thermosetting resin. For example, it may include at least one of epoxy resin, phenol resin, melamine resin, urea resin, unsaturated polyester resin, alkyd resin, silicon resin, polyurethane resin, and polyimide.

In addition, the resin may be a thermoplastic resin, and may include, for example, at least one of polytetrafluoroethylene, polyethylene, polypropylene, polystyrene, polyvinyl chloride, polyvinylidene chloride, fluororesin, acrylic resin, polyacetic acid vinyl resin, polyamide resin, polycarbonate, acetal resin, polyphenylene oxide, polyester, and polysulfone.

In addition, the resin may be a UV curing resin, and may include, for example, at least one of urethane acrylate, unsaturated polyester, epoxy acrylate, oxetane, polyvinyl ether, polyester acrylate, silicon acrylate, epoxy resin, glycidyl ether, and epoxy resin.

The UV curing resin may further include a photopolymerization initiator. The photopolymerization initiator may include at least one of an alkylphenone-based polymerization initiator, an acylphosphine oxide-based photopolymerization initiator, a titanocene-based compound, an oxime ester-based compound, a benzophenone-based compound, an acetophenone-based compound, a thioxanthone-based compound, an $\alpha$-acyloxylate-based compound, a phenylglyoxylate-based compound, azo-based compound, a diphenylsulfide-based compound, an organic pigment-based compound, an iron-phthalocyanine-based compound, a benzoin ether-based compound, an anthraquinone-based compound, a diazonium salt, an iodine salt, a sulfonium salt, and a metallocene compound.

The UV curing resin may have an organic solvent (NMP, acetone, and the like) or use water as a solvent.

The photopolymerization initiator may include one type, but is not limited thereto, and a plurality of photopolymerization initiators may be included. The photopolymerization initiator may be included in an amount of 0.01 to 10 mass%, preferably 0.1 to 5 mass%, and more preferably 0.5 to 3 mass%, based on the total mass of the resin.

The surface of the substrate made of metal is smooth, and thus the active material layer 71 may be easily separated. But, in an embodiment of the present disclosure, the amount of the active material layer that is separated may be reduced by forming the auxiliary layer 77 including the resin on the active material layer 71 to fix the active material layer 71.

FIG. 2 illustrates a schematic cross-sectional view of an electrode for a rechargeable battery according to another embodiment of the present disclosure.

As most of FIG. 2 is the same as FIG. 1, only the different portions will be described in detail.

Referring to FIG. 2, an electrode for a rechargeable battery according to another embodiment of the present disclosure includes a substrate 70 and an active material layer 71 formed on the substrate 70. The edge of the active material layer 71 has an inclined surface S, and an auxiliary layer 77 is formed on the inclined surface S.

The auxiliary layer 77 includes a lower layer 7 and an upper layer 8 formed on the lower layer 7. The lower layer 7 may be made of a mixture of an active material and a resin, and the upper layer 8 may be made of a resin. In this case, the resins of the lower layer 7 and the upper layer 8 may be the same material, but are not limited thereto, and may be different materials.

The thickness of the auxiliary layer 77 may be 10% or less of the total thickness of the active material layer, and the thickness of the upper layer 8 may be 0.5 $\mu$m to a maximum of 20 $\mu$m. In this case, the thickness of the auxiliary layer 77 is an average value obtained by measuring the thicknesses at points along the width D2 (see FIG. 3) of the auxiliary layer 77, with the points approximately dividing the auxiliary layer 77 into thirds in the width D2 direction. For example, if the width D2 is 10 mm, the thicknesses for determining the average value are at points 1 mm, 5 mm, and 9 mm from an edge of the auxiliary layer 77.

The above-described electrode may be used as a negative electrode of a rechargeable battery, and will be described below with reference to the drawings.

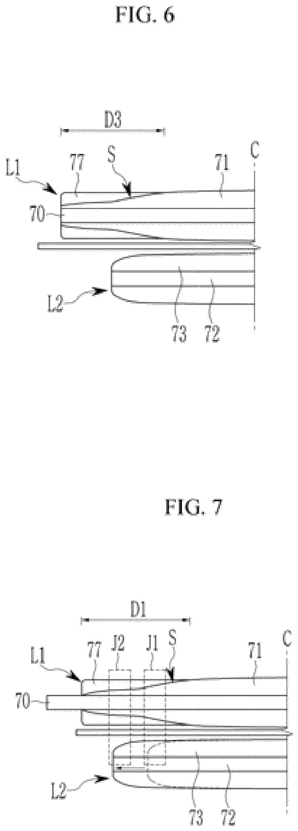

FIG. 3 illustrates a schematic exploded perspective view of an electrode assembly according to an embodiment of the present disclosure, FIG. 4 illustrates a top plan view of positive and negative electrodes of the electrode assembly of FIG. 3, FIG. 5 illustrates a cross-sectional view taken along line V-V' of FIG. 4, and FIG. 6 illustrates a cross-sectional view taken along line VI-VI' of FIG. 4.

As shown in FIG. 3 to FIG. 6, an electrode assembly 101 according to an embodiment of the present disclosure is a stacked electrode assembly 101 in which a negative electrode 200 and a positive electrode 100 are repeatedly stacked with a separator 300 interposed therebetween. The separator 300 is disposed between the positive electrode 100 and the negative electrode 200 and insulates the positive electrode 100 and the negative electrode 200 from each other.

The positive electrode 100 includes a substrate, a first electrode active region DA1 formed of an active material layer on the substrate, and a first electrode uncoated region DA2 in which the substrate is exposed as the active material is not applied in the uncoated region DA2.

The substrate of the positive electrode may be aluminum, and a compound capable of reversible intercalation and deintercalation of lithium (lithiated intercalation compound) may be used as the positive electrode active material forming the active material layer of the positive electrode 100. Specifically, the active material may be at least one composite oxide formed of a metal such as cobalt, manganese, nickel, and a combination thereof and the lithium. A content of the active material of the positive electrode may be 90 wt% to 98 wt% based on a total weight of the active material of the positive electrode.

The active material layer of the positive electrode may further include a binder and a conductive material. In this case, a content of each of the binder and the conductive material may be 1 wt% to 5 wt%, based on a total weight of the active material layer of the positive electrode.

The binder serves to attach particles of the active material of the positive electrode well to each other, and to attach the active material of the positive electrode to the substrate that is a current collector well. Representative examples of the binder include polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene butadiene rubber, acrylated styrene butadiene rubber, epoxy resin, nylon, and the like, but are not limited thereto. The conductive material is used in order to give conductivity to the electrode, and may be any material as long as the electronic conductive material does not trigger a chemical change in the battery configured.

The negative electrode is the negative electrode shown in FIG. 1 or FIG. 2 and includes a second electrode active region DB1 in which an active material layer is formed on the substrate 70 and a second electrode uncoated region in which the substrate is exposed by not applying the active material. The second electrode uncoated region may be used as an electrode tab for drawing a current to outside, and will be referred to as an electrode tab DB2 for convenience of description later.

Referring to FIG. 3 to FIG. 6, the active material layer 71 of the negative electrode has the inclined surface S at the edge, and the auxiliary layer 77 is formed on the inclined surface. Accordingly, the specific capacity and thickness at the edge and central portion of the active material layer 71 may be the same.

During the notching process for forming the electrode tab DB2, a cutting process using a laser may be performed along the circumference of the electrode, and at this time, a portion of the active material layer positioned at the edge may be also removed. That is, the electrode tab DB2 of the negative electrode and the boundary L1 of the active material layer may have an inclined surface of the active material layer that is different from the rest of the structure because of the cutting process is not being performed at the electrode tab DB2 part. Accordingly, the width D1 of the edge of the active material layer of the negative electrode positioned at the boundary L1 with the electrode tab DB2 may be greater than the width D3 of the edge of the active material layer of the negative electrode positioned around the negative electrode and subjected to the laser cutting process.

In this case, the cut surface of the active material layer of the negative electrode cut by the laser may be exposed to the outside and may have a cross section perpendicular to the substrate of the negative electrode. In the laser cutting, an edge adjacent to the electrode tab DB2 may be removed to a width within 1.5 mm, preferably 0.6 mm to 0.9 mm, from the end of the substrate. An edge positioned on the opposite side of the electrode tab DB2 and facing the electrode tab of the positive electrode may be removed within 3 mm.

Meanwhile, the boundary L1 between the electrode tab DB2 of the negative electrode and the active material layer has an inclined surface of the active material layer that is not affected by the cutting process, and at the end portion L2 of the positive electrode 100 corresponding to the inclined surface S, the active material layer 73 along with the substrate 72 may be cut with a laser. The cut surface of the active material layer 73 of the portion cut with the laser may have a cross section perpendicular to the substrate of the positive electrode.

As described above, the end portion L2 of the positive electrode 100 arranged by laser cutting may be relatively thicker than the inclined surface S of the negative electrode because the end portion of the inclined surface is cut. In this case, in a state in which the thickness of the active material layer 73 at the edge of the positive electrode 100 is relatively thick, when it faces the inclined surface S of the active material layer 71 of the negative electrode, the difference in specific capacity in an area J1 in which the positive electrode and the negative electrode face each other becomes great, and lithium may precipitate due to insufficient negative electrode specific capacity (NP<1).

In an embodiment of the present disclosure, in order to provide more uniformity in the specific capacity in the area J1 in which the positive and negative electrodes face each other, the auxiliary layer 77 is added, and the amount of the active material applied becomes substantially the same at the edge and the central portion C. Thus, a difference in specific capacity between the edge and the central portion is reduced. Accordingly, the lithium precipitation may be reduced and safety may be improved.

FIG. 7 illustrates an effect of an auxiliary layer according to an embodiment of the present disclosure.

As shown in FIG. 7, when the alignment positions of the end portion L2 of the active material layer of the positive electrode and the edge of the active material layer of the negative electrode are misaligned or the edges thereof are implemented short, the end portion of the positive electrode active material layer extends toward the end of the active material layer of the negative electrode (see arrow) so that the positive and negative electrodes may face each other J2. As described above, even if the positive electrode extends to a position that is closer to the edge of the negative electrode, in the embodiment of the present disclosure, the auxiliary layer 77 is formed so that the thickness of the negative electrode active layer is more uniform and specific capacity non-uniformity does not occur in the facing area J2. Thus, lithium precipitation does not occur due to insufficient negative electrode specific capacity (NP<1).

Referring again to FIG. 3 and FIG. 4, the separator 300 is a polymer film through which lithium ions may pass. Polyethylene, polypropylene, polyvinylidene fluoride, or a multifilm of two or more layers thereof may be used as the separator. A mixed multifilm such as a polyethylene/polypropylene double-layered separator, a polyethylene/polypropylene/polyethylene triple-layered separator, or a polypropylene/polyethylene/polypropylene triple-layered separator may also be used as the separator.

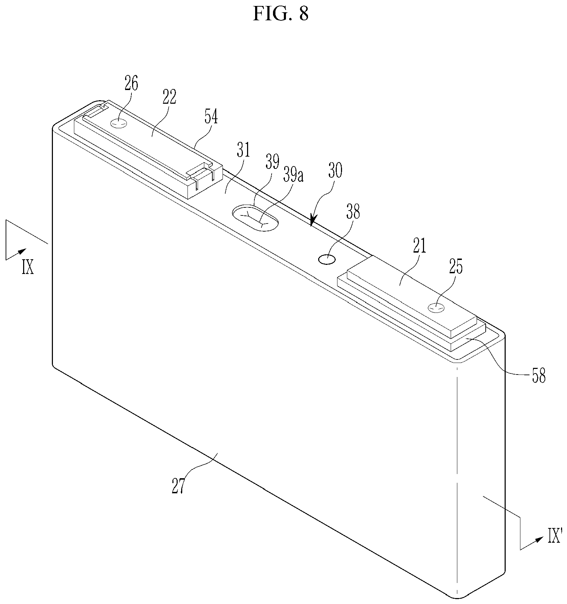

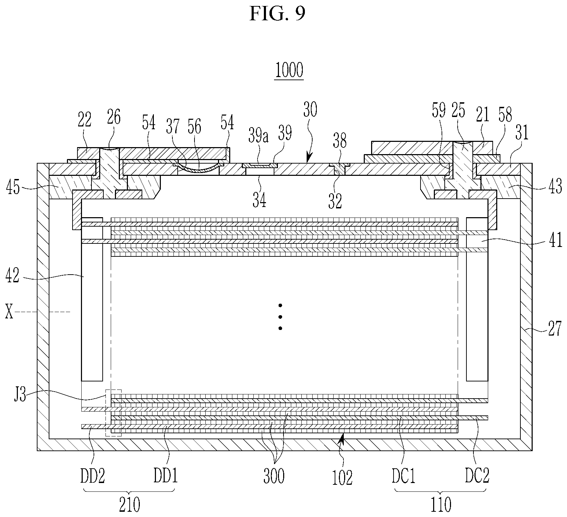

FIG. 8 illustrates a schematic perspective view of a rechargeable battery according to another embodiment of the present disclosure, and FIG. 9 illustrates a cross-sectional view taken along line IX-IX' of FIG. 8.

As shown in FIG. 8 and FIG. 9, a rechargeable battery 1000 according to an embodiment includes an electrode assembly 102, a case 27 accommodating the electrode assembly 102, and a cap assembly 30 installed in an opening of the case 27.

The electrode assembly 102 includes a positive electrode 110 and a negative electrode 210, which are sequentially stacked, and a separator 300 disposed therebetween (as described above). The separator 300 is disposed between the positive electrode 110 and the negative electrode 210 and insulates the positive electrode 110 and the negative electrode 210 from each other.

The electrode assembly 102 may be a jelly roll type that is wound around a winding axis X with a separator 300 interposed between the positive electrode (or first electrode) 110 and the negative electrode (or second electrode) 210, with the wound structure being pressed flat.

The positive electrode 110 includes a strip-shaped substrate having a long length in one direction, a first electrode active region DC1 including an active material layer formed on the substrate in a length direction of the substrate, and a first electrode uncoated region DC2 in which the substrate is exposed by not applying the active material. The first electrode uncoated region DC2 may be formed long along the first electrode active region DC1. Therefore, a separate laser notching process may not be performed to form the electrode tab, but the present disclosure is not limited thereto, and as necessary, the first electrode uncoated region DC2 in the form of an electrode tab protruding from the first electrode active region DC1 may be formed using a laser at regular intervals. In this case, the first electrode uncoated region DC2 may be formed so that a plurality of first electrode uncoated regions DC2 overlap each other to be electrically connected by welding.

The negative electrode 210 includes a strip-shaped substrate having a long length in one direction, a second electrode active region DD1 including an active material layer formed on the substrate in a length direction of the substrate, and a second electrode uncoated region DD2 in which the substrate is exposed by not applying the active material. The second electrode uncoated region DD2 may be formed long along the second electrode active region DD1. Therefore, a separate laser notching process may not be performed to form the electrode tab, but the present disclosure is not limited thereto, and as necessary, the second electrode uncoated region DD2 in the form of an electrode tab protruding from the second electrode active region DD1 may be formed using a laser at regular intervals. In this case, the second electrode uncoated region DD2 may be formed so that a plurality of second electrode uncoated regions DD2 overlap each other to be electrically connected by welding.

In addition, the negative electrode may have the edge shape of the negative electrode shown in FIG. 1 or FIG. 2. In other words, the active material layer of the negative electrode has an inclined surface at the edge, and an auxiliary layer is formed on the inclined surface. Accordingly, the specific capacity and thickness at the edge and central portion of the active material layer may be the same. In this case, the edge of the negative electrode active material layer may be where the end of the negative electrode active material layer is positioned, and may be, for example, an area J3 adjacent to the second electrode uncoated region DD2.

As described above, in the embodiment of the present disclosure, the auxiliary layer is formed on the inclined surface of the negative electrode active material layer, so that the thickness of the edge is constant, thereby reducing phenomena such as lithium precipitation. In other words, since the amount of active material is substantially the same at the edge and the central portion, a difference in specific capacity between the edge and the central portion is reduced. Accordingly, the lithium precipitation may be reduced and safety may be improved.

Meanwhile, the electrode assembly 102 may be accommodated in the case 27 together with an electrolyte, and the electrolyte includes a non-aqueous organic solvent and a lithium salt. The non-aqueous organic solvent serves as a medium through which ions involved in the electrochemical reaction of the battery may move. The lithium salt is a substance that dissolves in an organic solvent and acts as a supply source of lithium ions in the battery, enabling the basic operation of a lithium rechargeable battery and promoting the movement of lithium ions between the positive electrode and the negative electrode. Representative examples of the lithium salt include one or two or more selected from the group consisting of $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $LiC_4F_9SO_3$, $LiClO_4$, $LiAlO_2$, $LiAlCl_4$, $LiN(C_xF_{2x+1}SO_2)(C_yF_{2y+1}SO_2)$ (where x and y are natural numbers, for example, integers from 1 to 20), LiCl, LiI, and $LiB(C_2O_4)_2$ (lithium bis(oxalato) borate (LiBOB)), as a supporting electrolytic salt. The concentration of the lithium salt may be within the range of 0.1 M to 2.0 M. When the concentration of the lithium salt is included within the such a range, excellent electrolyte performance may be provided because the electrolyte has appropriate conductivity and viscosity, and lithium ions may effectively move.

The case 27 may be made of a metal such as aluminum and may have a substantially rectangular parallelepiped shape. One side of the case 27 may be opened, and a cap plate may be installed on the opened side of the case 27.

The cap assembly 30 includes a cap plate 31 coupled to the case 27 to block the opening of the case 27, a positive electrode terminal 21 electrically connected to the positive electrode 110, and a negative electrode terminal 22 electrically connected to the negative electrode 210, wherein the positive and negative electrode terminals 21 and 22 protrude to the outside of the cap plate 31. The cap plate 31 is formed in the form of a long plate extending in one direction and is coupled to the opening of the case 27.

The cap plate 31 has an injection hole 32 penetrating to inside of the case 27. The injection port 32 is used for injecting an electrolyte solution, and a sealing stopper 38 may be installed in the injection port 32. In addition, a vent plate 39 with a notch 39a is installed in a vent hole 34 so that the cap plate 31 may be opened at a set pressure.

The positive terminal 21 and the negative terminal 22 are installed to protrude upward from the cap plate 31. The positive terminal 21 is electrically connected to the positive electrode 110 through the current collecting tab 41, and the negative terminal 22 is electrically connected to the negative electrode 210 through the current collecting tab 42.

A terminal connection member 25 is installed between the positive terminal 21 and the current collecting tab 41 to electrically connect the positive terminal 21 and the current collecting tab 41. The terminal connection member 25 is inserted into the hole formed in the positive terminal 21, so that the upper end thereof is fixed to the positive terminal 21 by welding, and the lower end thereof is fixed to the current collecting tab 41 by welding.

Between the terminal connection member 25 and the cap plate 31, a gasket 59 for sealing is inserted into the hole through which the terminal connection member 25 passes, and a lower insulating member 43 into which a lower portion of the terminal connection member 25 is inserted is installed under the cap plate 31. A connection plate 58 is installed between the positive terminal 21 and the cap plate 31 to electrically connect them. The terminal connection member 25 is installed by being inserted into the connection plate 58. Accordingly, the cap plate 31 and the case 27 are charged with the positive electrode 110.

A terminal connection member 26 is installed between the negative terminal 22 and the current collecting tab 42 to electrically connect the negative terminal 22 and the current collecting tab 42. The terminal connection member 26 is inserted into the hole formed in the negative terminal 22, so that the upper end thereof is fixed to the negative terminal 22 by welding, and the lower end thereof is fixed to the current collecting tab 42 by welding.

Between the negative terminal 22 and the cap plate 31, a gasket 59 for sealing is inserted and installed into the hole through which the terminal connection member 26 passes, and an upper insulating member 54 is installed to insulate between the negative terminal 22 and the cap plate 31. The terminal connection member 26 may be installed by being inserted into a hole of the upper insulating member 54, and the upper insulating member 54 may be formed to surround an end of the negative terminal 22.

In addition, under the cap plate 31, a lower insulating member 45 is installed to insulate the negative terminal 22 and the current collecting tab 42 from the cap plate 31.

A short-circuiting hole 37 is formed in the cap plate 31, and a short-circuiting member 56 is installed in the short-circuiting hole 37. The short-circuiting member 56 includes a curved portion convexly curved downward in an arc shape and an edge portion formed on the outside of the curved portion and fixed to the cap plate 31. The upper insulating member 54 may have a cutout that overlaps the short-circuiting hole 37, and the short-circuiting member 56 overlaps the negative terminal 22 exposed through the cutout.

The short-circuiting member 56 is electrically connected to the cap plate 31, and is deformed when the internal pressure of the rechargeable battery 1000 increases, causing short-circuiting between the positive and negative electrodes. When gas is generated due to an abnormal reaction inside the rechargeable battery, the internal pressure of the rechargeable battery increases. When the internal pressure of the rechargeable battery becomes greater than the preset pressure, the curved portion is deformed to be convex upward, and at this time, the negative terminal 22 and the short-circuiting member 56 come into contact with each other, causing a short-circuit.

In order to facilitate short-circuiting between the negative terminal 22 and the short-circuiting member 56, the negative terminal 22 may further include at least one protrusion (not shown) protruding toward the short-circuiting member 56, and the protrusion may be spaced apart from the short-circuiting member 56.

In the above embodiment, the rechargeable battery including the prismatic case has been described, but the present disclosure is not limited thereto. The rechargeable battery may include a cylindrical case and a pouch-type case.

## Claims

1. An electrode for a rechargeable battery (1000) comprising:

   a substrate (70, 72) having an electrode uncoated region,
   an active material layer (71, 73) forming an electrode active region on the substrate (70, 72), the active material layer (71, 73) having an end portion that has an inclined surface with respect to the substrate (70, 72), and
   an auxiliary layer (77) formed on the inclined surface (S) of the active material layer (71, 73),
   wherein the auxiliary layer (77) includes an active material and a resin.

2. The electrode for the rechargeable battery (1000) of claim 1, wherein the active material and the resin of the auxiliary layer (77) are mixed in a ratio of 99.9:0.1 to 90:10.

3. The electrode for the rechargeable battery (1000) of claim 1 or 2, wherein the auxiliary layer (77) includes a lower layer (7) made of the active material and the resin and an upper layer (8) made of the resin, with the upper layer (8) being positioned on the lower layer (7).

4. The electrode for the rechargeable battery (1000) of claim 3, wherein the active material and the resin of the lower layer (7) are mixed in a ratio of 99.9:0.1 to 90:10.

5. The electrode for the rechargeable battery (1000) of claim 3 or 4, wherein
   a thickness of the upper layer (8) is 0.5 $\mu$m to 20 $\mu$m.

6. The electrode for the rechargeable battery (1000) of any one of the preceding claims, wherein a thickness of the auxiliary layer (77) is 10 % or less of a maximum thickness of the active material layer (71, 73).

7. The electrode for the rechargeable battery (1000) of any one of the preceding claims, wherein the resin includes one of a thermosetting resin, a UV curing resin, and a thermoplastic resin.

8. The electrode for the rechargeable battery (1000) of claim 7, wherein the thermosetting resin includes at least one of an epoxy resin, a phenol resin, a melamine resin, a urea resin, an unsaturated polyester resin, an alkyd resin, a silicon resin, a polyurethane resin, and a polyimide; and/or

   wherein the thermoplastic resin includes at least one of polytetrafluoroethylene, polyethylene, polypropylene, polystyrene, polyvinyl chloride, polyvinylidene chloride, a fluororesin, an acrylic resin, a polyacetic acid vinyl resin, a polyamide resin, a polycarbonate resin, an acetal resin, a polyphenylene oxide, a polyester, and a polysulfone; and/or
   wherein the UV curing resin includes at least one of a urethane acrylate, an unsaturated polyester, an epoxy acrylate, an oxetane, a polyvinyl ether, a polyester acrylate, a silicon acrylate, an epoxy resin, a glycidyl ether, and an epoxy resin.

9. The electrode for the rechargeable battery (1000) of claim 8, wherein the UV curing resin further includes a photopolymerization initiator, and
the photopolymerization initiator is 0.01 mass% to 10 mass% based on a total mass of the resin included in the auxiliary layer (77).

10. The electrode for the rechargeable battery (1000) of any one of the preceding claims, wherein the active material is a negative electrode (200, 210) active material includes a carbon-based active material.

11. The electrode for the rechargeable battery (1000) of any one of the preceding claims, wherein the electrode uncoated region of the substrate (70, 72) protrudes from the electrode active region, and
wherein a width of a first edge of the active material layer (71, 73) positioned at a boundary between the electrode uncoated region and the electrode active region and having the inclined surface (S) is greater than a width of a second edge of the active material layer (71, 73) positioned at an end of the electrode active region and having the inclined surface (S).

12. The electrode for the rechargeable battery (1000) of claim 11, wherein the second edge of the active material layer (71, 73) is cut with a laser beam and a resulting cut surface is exposed to outside of the electrode.

13. An electrode assembly (101, 102) comprising:

    a negative electrode (200, 210) comprising:

        a substrate (70, 72) having an electrode uncoated region,
        an active material layer (71, 73) forming an electrode active region on the substrate (70, 72), the active material layer (71, 73) having an end portion that has an inclined surface (S) with respect to the substrate (70, 72), and
        an auxiliary layer (77) formed on the inclined surface of the active material layer (71, 73),
        wherein the auxiliary layer (77) includes an active material and a resin;

    a positive electrode (100, 110) overlapping the negative electrode (200, 210), and
    a separator (300) disposed between the negative electrode (200, 210) and the positive electrode (100, 110),
    wherein a portion of an end portion of the positive electrode (100, 110) corresponds to the inclined surface of the negative electrode (200, 210) on which the auxiliary layer (77) is formed.

14. The electrode assembly (101, 102) of claim 15, wherein an end portion of the active material layer (71, 73) of the positive electrode (100, 110) corresponding to the inclined surface (S) of the negative electrode (200, 210) is cut with a laser beam to have a cross section perpendicular to a substrate (70, 72) of the positive electrode (100, 110).

15. The electrode assembly (101, 102) of claim 13 or 14, wherein the electrode assembly (101, 102) includes a plurality of the negative electrode (200, 210), a plurality of the separator (300), and a plurality of the positive electrode (100, 110), with the negative electrodes (200, 210) and positive electrodes (100, 110) being repeatedly stacked with the separators (300) between the negative electrodes (200, 210) and the positive electrodes (100, 110) to form a sheet, and
wherein the electrode uncoated regions of the negative electrodes (200, 210) and electrode uncoated regions of the positive electrodes (100, 110) protrude in opposite directions from the sheet.

FIG. 1

FIG. 2

FIG. 3

FIG. 4

FIG. 5

## FIG. 6

## FIG. 7

FIG. 8

FIG. 9

Europäisches
Patentamt

European
Patent Office

Office européen
des brevets

# EUROPEAN SEARCH REPORT

**Application Number**

EP 25 15 2314

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/200305 A1 (LG ENERGY SOLUTION LTD [KR]) 19 October 2023 (2023-10-19) | 1-15 | INV. H01M4/04 |
| Y | * abstract * <br> * figure 1 * <br> * claims 1-4, 11, 14, 15 * <br> -& EP 4 489 104 A1 (LG ENERGY SOLUTION LTD [KR]) 8 January 2025 (2025-01-08) <br> ----- | 1-15 | H01M4/13 <br> H01M4/139 <br> H01M10/42 <br> H01M10/0525 |
| Y | EP 4 191 702 A1 (LG ENERGY SOLUTION LTD [KR]) 7 June 2023 (2023-06-07) <br> * paragraph [0052]; figures 1-2 * <br> ----- | 1-15 | |
| Y | EP 4 106 057 A1 (CONTEMPORARY AMPEREX TECHNOLOGY CO LTD [CN]) 21 December 2022 (2022-12-21) <br> * paragraph [0005] - paragraph [0006] * <br> * paragraph [0012] * <br> * paragraph [0080]; figures 8-13 * <br> ----- | 1-15 | |
| Y | EP 4 089 769 A1 (CONTEMPORARY AMPEREX TECHNOLOGY CO LTD [CN]) 16 November 2022 (2022-11-16) <br> * paragraph [0004] - paragraph [0008] * <br> * paragraph [0018] - paragraph [0019]; figures 7-10 * <br> ----- | 1-15 | **TECHNICAL FIELDS SEARCHED (IPC)** <br><br> H01M |

The present search report has been drawn up for all claims

| Place of search | Date of completion of the search | Examiner |
|---|---|---|
| Munich | 13 June 2025 | Tylus, Urszula |

EPO FORM 1503 03.82 (P04C01)

## ANNEX TO THE EUROPEAN SEARCH REPORT
## ON EUROPEAN PATENT APPLICATION NO.

EP 25 15 2314

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2025

| Patent document cited in search report | | Publication date | Patent family member(s) | | Publication date |
|---|---|---|---|---|---|
| WO 2023200305 | A1 | 19-10-2023 | CN | 118974964 A | 15-11-2024 |
| | | | EP | 4489104 A1 | 08-01-2025 |
| | | | JP | 2025511681 A | 16-04-2025 |
| | | | KR | 20230148125 A | 24-10-2023 |
| | | | WO | 2023200305 A1 | 19-10-2023 |
| EP 4489104 | A1 | 08-01-2025 | CN | 118974964 A | 15-11-2024 |
| | | | EP | 4489104 A1 | 08-01-2025 |
| | | | JP | 2025511681 A | 16-04-2025 |
| | | | KR | 20230148125 A | 24-10-2023 |
| | | | WO | 2023200305 A1 | 19-10-2023 |
| EP 4191702 | A1 | 07-06-2023 | CN | 116075953 A | 05-05-2023 |
| | | | EP | 4191702 A1 | 07-06-2023 |
| | | | JP | 7556639 B2 | 26-09-2024 |
| | | | JP | 2023537577 A | 04-09-2023 |
| | | | KR | 20230010502 A | 19-01-2023 |
| | | | US | 2023361270 A1 | 09-11-2023 |
| | | | WO | 2023287076 A1 | 19-01-2023 |
| EP 4106057 | A1 | 21-12-2022 | CN | 115606020 A | 13-01-2023 |
| | | | EP | 4106057 A1 | 21-12-2022 |
| | | | EP | 4553915 A2 | 14-05-2025 |
| | | | US | 2022416232 A1 | 29-12-2022 |
| | | | WO | 2022165689 A1 | 11-08-2022 |
| EP 4089769 | A1 | 16-11-2022 | CN | 115413379 A | 29-11-2022 |
| | | | EP | 4089769 A1 | 16-11-2022 |
| | | | US | 2022311056 A1 | 29-09-2022 |
| | | | WO | 2022198682 A1 | 29-09-2022 |

EPO FORM P0459

For more details about this annex : see Official Journal of the European Patent Office, No. 12/82